# EUROPÄISCHE PATENTSCHRIFT

(11) **EP 0 427 167 B1**
(45) Veröffentlichungstag und Bekanntmachung des Hinweises auf die Patenterteilung: **27.07.1994**
(21) Anmeldenummer: 90121114.4
(22) Anmeldetag: 05.11.1990
(51) Int. Cl.: A47B 57/42, B65G 1/02

(54) **Kragarm-Regal mit Steckverbindung**
Shelf with insertable cantilever brackets
Rayonnage à consoles enfichables

(30) Priorität: 09.11.1989 DE 3937337
(43) Veröffentlichungstag der Anmeldung: 15.05.1991
(73) Patentinhaber: Hölscher, Andreas, D-50931 Köln (DE)
(72) Erfinder: Hölscher, Andreas, D-50931 Köln (DE)
(74) Vertreter: Mey, Klaus-Peter, Dr.-Ing. Dipl.-Wirtsch.-Ing.

(56) Entgegenhaltungen:
- EP-A- 0 061 514
- CH-A- 284 036
- DE-C- 536 723
- FR-A- 2 513 351
- US-A- 3 164 255

## Beschreibung

Die Erfindung betrifft ein Kragarmregal für schwere Lasten, insbesondere Langgutprodukte aus Holz, Kunststoff oder Metall, beispielsweise Schnitthölzer, Spanplatten, Bretter, Rohre, Profileisen und dgl., mit Ständern und sich von diesen aus erstreckenden Kragarmen, wobei in den Ständern Ausstanzungen und an den Kragarmen nach oben gebogene, sich über die Oberseite des Kragarmes hinaus erstreckende Haken zum lösbaren Einhängen in die Ausstanzungen vorgesehen sind, wobei die Ständer vorzugsweise als Doppel-T-Profilständer ausgebildet und in den Flanschen der Profilständer die Ausstanzungen in gleicher Höhe übereinander angeordnet sind.

Aus der europäischen Patentschrift 0 061 514 ist ein Kragarm-Regal für schwere Lasten bekannt, das ein selbstsicherndes Einhängen der Kragarme bei gleichzeitiger Beweglichkeit im eingehängten Zustand ermöglicht, wobei aber das Ein- bzw. Aushängen immer nur unter einem bestimmten Winkel gegenüber der Vertikalen erfolgen kann. Zum Auswechseln oder zusätzlichen Anbringen eines Kragarmes müssen daher unter bestimmten Bedingungen, das heißt bei großer Länge und/oder geringer Abstandshöhe die darüber befindlichen Arme mit den darauf liegenden Lasten bei entsprechendem Arbeits- und Zeitaufwand vorher entfernt werden.

Zur Arbeitserleichterung wurde in einer nicht vorveröffentlichten deutschen Patentanmeldung vorgeschlagen, daß in die Ausstanzungen die Haken horizontal einbringbar und mittels Sicherungselementen arretierbar sind. Das Ein- und Aushängen der Kragarme wird hierdurch zwar erheblich erleichtert, jedoch verbleibt der Nachteil, die Sicherungselemente zusätzlich handhaben zu müssen.

Aus der CH-A-284 036 ist ein Traggestell für Tablare mit mindestens einem aus einem Profilstab gebildeten Träger und mit in letzterem lösbar befestigten, freitragende Konsolen bildenen T-Profilstücken bekannt. Der Träger weist in Form und Größe dem T-Profil der Konsolen entsprechende Ausnehmungen und die Konsolen an ihren Befestigungsenden in jedem Schenkel des T-Profils eine quer zur Längsachse gerichtete, in ihrer Breite der Wandstärke des Trägerprofils entsprechende Kerbe auf, in welche die Wandung des Trägers bei in die Ausnehmungen eingesetzten Konsolen zu liegen kommt. Dadurch sind die Konsolen in die Ausnehmungen der Träger einsteckbar und nach erfolgtem Einstecken durch Absenken in den Trägern fixierbar.

Der Erfindung liegt daher die Aufgabe zugrunde, das bekannte Kragarmregal weiter zu verbessern und unter Vermeidung der vorgenannten Nachteile besonders einfach montier- und variierbar sowie für Gabelstaplerbetrieb geeignet zu machen. Diese Aufgabe wird erfindungsgemäß durch eine Ausbildung der Haken bzw. Krallen an den Kragarmen entsprechend dem Kennzeichnungsteil in Anspruch 1 gelöst. Die Kragarme sind mit ihren Krallen in die Ausstanzungen der Ständer horizontal einsteckbar und nach erfolgtem Einstecken durch Absenken in den Ständern fixierbar. Die erfindungsgemäße Verbindung zwischen Kragarm und Ständer ist für schwerste Lasten geeignet und selbstsichernd. Die Kragarme können zudem in ihrer Halterung auch winkelig angehoben werden, beispielsweise in einem Neigungswinkel bis zu 45 Grad, ohne daß sich die Verbindung löst. Die Krallen am Kragarm können mit großem Vorteil zur Aufnahme auch schwerster Lasten beliebig stark ausgebildet sein.

Ferner sind die Querschnitte der Ausstanzungen und der Haken formmäßig einander angepaßt. Auf diese Weise kann eine hohe Lagestabilität gewährleistet werden.

In vorteilhafter Ausgestaltung der Erfindung sind je Kragarm jeweils zwei Haken bzw. Krallen vorgesehen, die jeweils aus einem Ansatz und einem Krallenende bestehen, wobei die Krallenenden nach Absenken zumindest teilweise die Flansche hintergreifen. Auf diese Weise wird eine sichere und dennoch einfach montier- und demontierbare Verbindung zwischen Kragarm und Ständer ermöglicht. Zweckmäßigerweise sind die Krallenenden im Querschnitt trapezförmig ausgebildet und vom Ansatz abgewinkelt. Mit großem Vorteil sind die Abwinkelungen der Krallenenden zweier an einem Kragarm angebrachter Haken spiegelsymmetrisch nach innen gerichtet, wodurch besonders schwere Lasten aufgenommen werden können. Dabei kann die Querschnittsform der Krallenenden in Achsrichtung des Kragarms abgerundet ausgebildet sein.

Weitere Einzelheiten, Merkmale und Vorteile der Erfindung ergeben sich aus der nachstehenden Erläuterung der in den Zeichnungen schematisch dargestellten Ausführungsbeispiele.

Es zeigen:
- Fig. 1: eine schematische, perspektivische Teilansicht eines Regalständers,
- Fig. 2: eine schematische Vorderansicht der Haken bzw. Verbindungskrallen eines Kragarmes,
- Fig. 3: eine schematische Seitenansicht eines Kragarms mit Haken am Ständer,
- Fig. 4a - d: schematische Darstellung des Verbindungsvorganges zwischen Kralle und Ständeröffnung,
- Fig. 5: verschiedene Varianten der Ausgestaltung von Querschnittsprofilen der Ständerlochungen sowie der Kragarmkrallen.

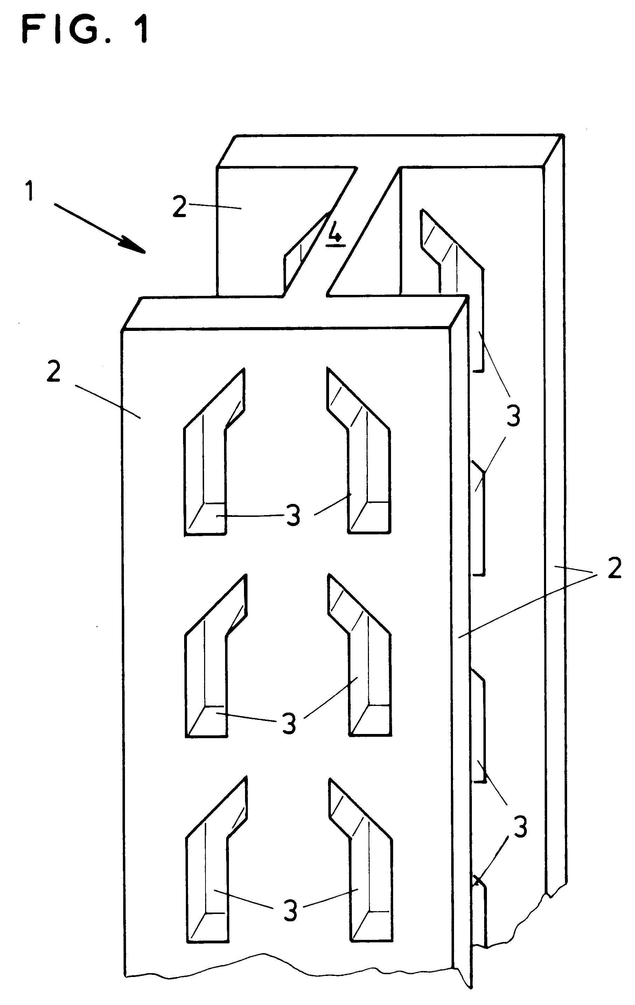

Das erfindungsgemäße Kragarm-Regal weist mehrere Profilständer auf, zumindest zwei Ständer für ein Regal; die Anzahl der Ständer ist jedoch beliebig. Die Profilständer können bekanntermaßen in gleichen oder ungleichen Abständen angeordnet und miteinander verbunden sein (nicht dargestellt). Beim Ausführungsbeispiel gemäß Figur 1 ist ein solcher Profilständer (1) als Doppel-T-Profilständer ausgebildet und als Teilstück dargestellt. In den Flanschen (2) des Profilständers (1) sind Öffnungen bzw. Ausstanzungen (3) in gleicher Höhe zu beiden Seiten des Steges (4) und in gleichem Abstand voneinander übereinander angeordnet. Die Ausstanzungen (3) können auf einer oder beiden Seiten des Doppel-T-Trägers vorgesehen sein. Im Ausführungsbeispiel sind die Ausstanzungen (3) als vertikale Langlöcher ausgebildet, die oben jeweils eine nach innen auf den Verbindungssteg (4) zeigende abgewinkelte Erweiterung bzw. Lochform aufweisen. Die Abwinkelung kann dabei allerdings alternativ vom Steg (4) wegzeigen (nicht dargestellt).

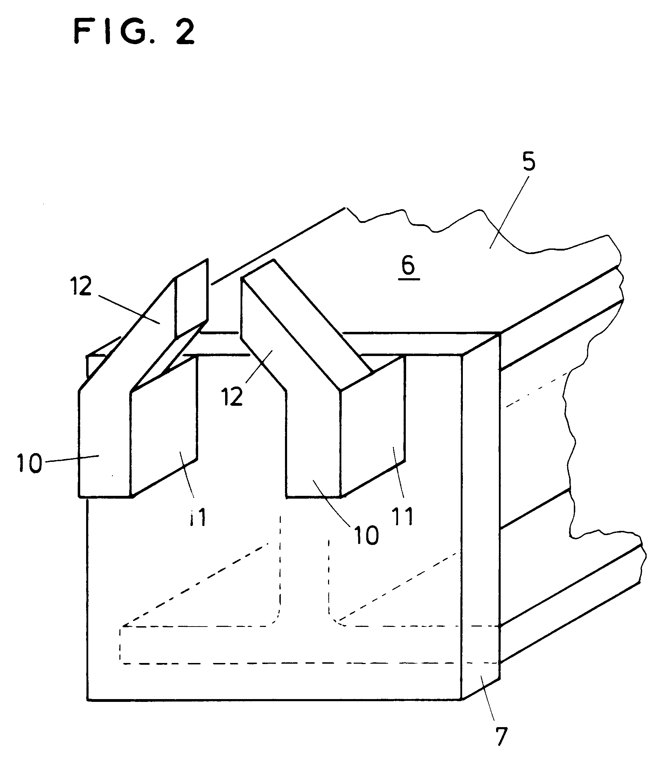

Wie aus Figur 2 erkennbar, haben die in die Ausstanzungen (vgl. Fig. 1, Ziffer 3) einzuhängenden Kragarme (5) an einem Ende mindestens eine, vorzugsweise zwei Krallen bzw. Haken (10), mit denen sie in lösbarer Weise in die Ausstanzungen (3) horizontal einsteckbar und durch Absenken in den Ständern fixierbar sind. Die Haken (10) erstrecken sich gegenüber der Oberseite (6) eines Kragarmes (5) nach oben und bestehen aus einem Zapfen bzw. Ansatz (11) mit einem schlüsselähnlichen, im Querschnitt hierbei trapezförmigen Bart- bzw. Kallenende (12), wobei zweckmäßigerweise die Querschnitte der Ausstanzungen in den Profilständern (vgl. Fig. 1, Ziffern 3 und 1) und der Haken (10) formmäßig einander angepaßt sind. Am Ende des Kragarmes (5) ist ferner in bekannter Weise eine Fußplatte (7) befestigt, die am Kragarm (5) beispielsweise angeschweißt sein kann, wobei der Kragarm (5) selbst vorzugsweise aus einem Doppel-T-Profil besteht (gestrichelte Linien).

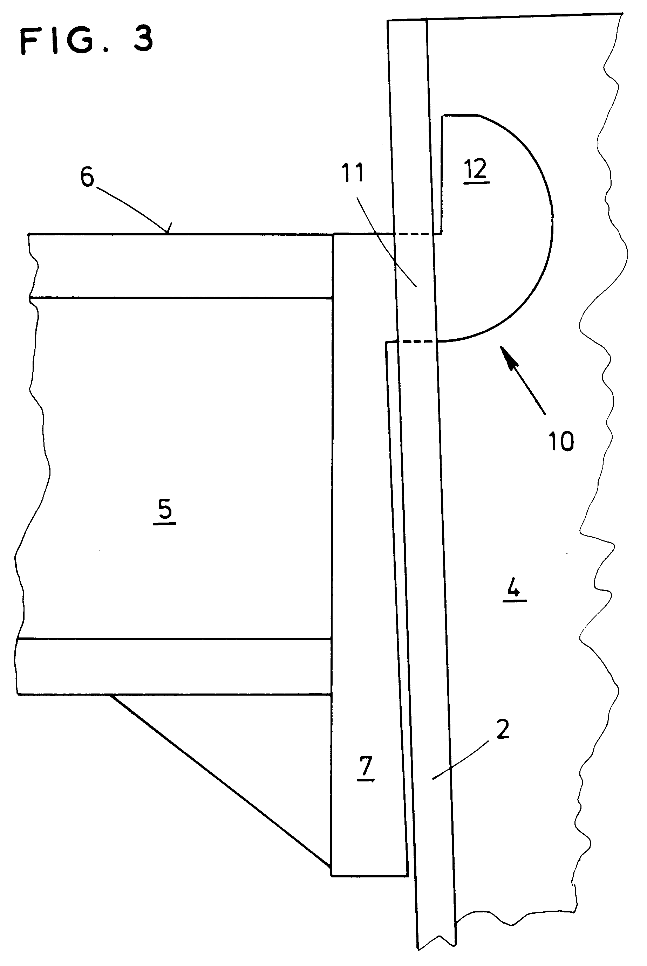

Zur Montage eines Kragarms (5) an einem Ständer (1) werden die Haken (10) durch die Ausstanzungen in den Flanschen (2) horizontal hindurchgesteckt, dann wird der Kragarm (5) abgesenkt. Nach der Absenkung bilden die dem Kragarm (5) zugewandten Teilflächen der Krallenenden (12) die Druckflächen gegenüber den Flanschen (2), wie dies insbesondere aus Figur 3 zu ersehen ist. Die Querschnittsform der Krallenenden in Achsrichtung des Kragarms (5) ist in diesem Ausführungsbeispiel zur optimalen Aufnahme von Kräften abgerundet ausgebildet.

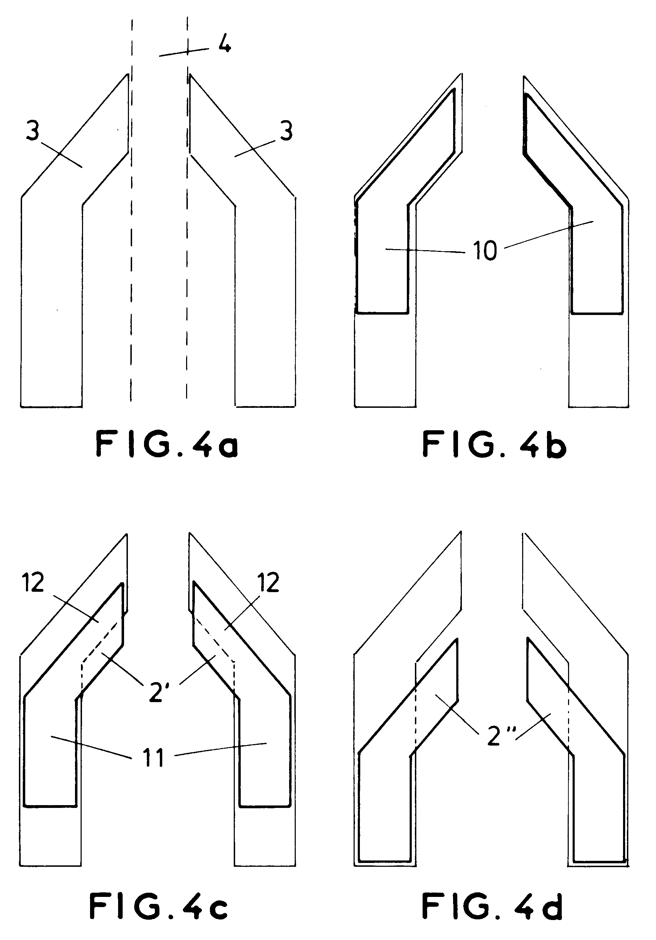

Anhand der Figuren 4a bis 4d kann der Montagevorgang eines Kragarms im einzelnen deutlich gemacht werden, wobei in Fig. 4a die schematische Vorderansicht zweier Ständerlochungen bzw. Öffnungen (3) in ihrer Lage zum Steg (4) gezeigt ist. Zur Befestigung eines Kragarms am Ständer werden dessen Haken (10) gemäß Fig. 4b vor die Öffnungen (3) gebracht und in diese horizontal hineingesteckt und sodann abgesenkt. Nach Fig. 4c greifen die Krallenenden (12) der Haken (10) beim Absenken hinter die Innenflächen (2′) der Flansche und haben in der völlig abgesenkten Position gemäß Fig. 4d ausreichende Anpreßflächen (2˝) zur Abstützung des Kragarms auch bei Auflage höchster Lasten, ohne daß die Flansche an diesen Stellen ausgebeult werden. Vorteilhaft liegen diese Anpreßflächen (2˝) daher unmittelbar neben dem Steg (4) eines Ständers.

Ein Lösen der Verbindung, beispielsweise zum Wechseln eines Kragarms geschieht analog in umgekehrter Reihenfolge wie vorstehend beschrieben. Das erfindunsgemäße Regal läßt sich mit geringem Arbeitsaufwand leicht verändern und neuen Anforderungen auf einfachste Weise anpassen. Die Montage und die Demontage ist außerordentlich einfach und kann von ungeschultem Personal durchgeführt werden.

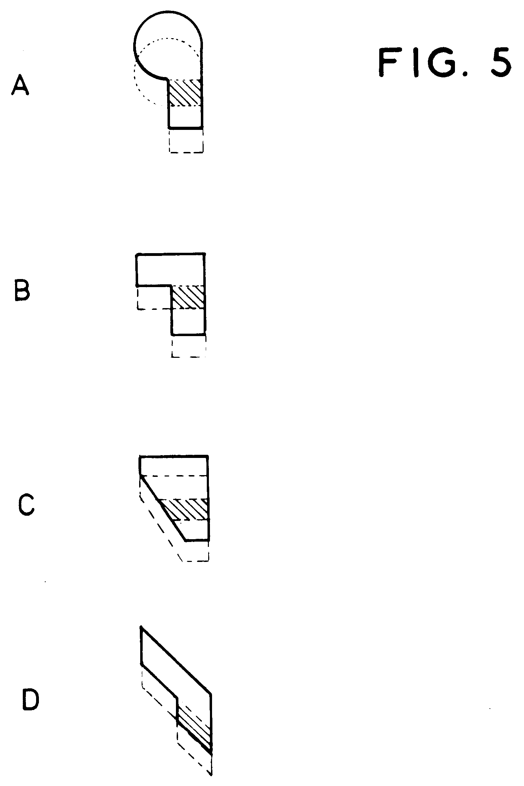

In Figur 5 sind weitere Beispiele (A - D) der Ausgestaltung der Lochungen bzw. Öffnungen (dick umrandet) in den Profilständern sowie der Haken bzw. Krallen dargestellt, wobei jeweils für die Haken die abgesenkte Position gestrichelt ist. Die schraffierten Flächen kennzeichnen die Querschnitte der Ansätze bzw. Verbindungszapfen der Krallenden zum Kragarm. Dabei ist es selbstverständlich, daß die öffnungs- bzw. Hakenprofile auch spiegelbildlich an den Flanschen der Ständer angeordnet sein können.

Die erfindungsgemäßen Maßnahmen sind nicht auf die in den Zeichnungsfiguren dargestellten Ausführungsbeispiele beschränkt. Selbstvertändlich läßt sich die Erfindung auch bei anderen Profilen für Ständer und/oder Kragarme, beispielsweise U-, T- oder L-Profilen verwirklichen. Die jeweilige konstruktive Ausgestaltung ist in Anpassung an die spezielle Verwendung der Vorrichtung dem Fachmann anheimgestellt.

## Patentansprüche

1. Kragarmregal für schwere Lasten, insbesondere Langgutprodukte aus Holz, Kunststoff oder Metall, mit Ständern (1) und sich von diesen aus erstreckenden Kragarmen (5), wobei in den Ständern Ausstanzungen (3) und an den Kragarmen jeweils zwei nach oben gebogene, sich über die Oberseite des Kragarmes hinaus erstreckende Haken (10) zum lösbaren Einhängen in die Ausstanzungen vorgesehen sind, wobei die Ständer vorzugsweise als Doppel-T-Profilständer ausgebildet und in den Flanschen (2) der Profilständer die Ausstanzungen in gleicher Höhe übereinander angeordnet sind, **dadurch gekennzeichnet**, daß in die Ausstanzungen (3) die Haken (10) der Kragarme (5) horizontal einsteckbar und nach erfolgtem Einstecken durch Absenken in den Ständern (1) fixierbar sind, wobei die Querschnitte der Ausstanzungen (3) und der Haken (10) formmäßig einander angepaßt sind und die Haken (10) jeweils aus einem Ansatz (11) und einem Krallenende (12) bestehen, das oberhalb des Ansatzes (11) angeordnet und in bezug zur Ebene des Steges (4) abgewinkelt ausgebildet ist, wobei die Krallenenden (12) nach Absenken zumindest teilweise die Flansche (2) hintergreifen und Druckflächen gegenüber den Flanschen (2) bilden.

2. Kragarmregal nach Anspruch 1, **dadurch gekennzeichnet**, daß die Abwinkelungen der Krallenenden (12) zweier an einem Kragarm (5) angebrachter Haken (10) spiegelsymmetrisch nach innen auf den Steg (4) gerichtet sind.

3. Kragarmregal nach Anspruch 1 oder 2, **dadurch gekennzeichnet**, daß die Krallenenden (12) mit einem schlüsselähnlichen Querschnitt ausgebildet sind.

4. Kragarmregal nach Anspruch 3, **dadurch gekennzeichnet**, daß die Krallenenden (12) im Querschnitt trapezförmig ausgebildet sind.

5. Kragarmregal nach einem oder mehreren der Ansprüche 1 bis 4, **dadurch gekennzeichnet**, daß die Querschnittsform der Krallenenden (12) in Achsrichtung des Kragarms (5) abgerundet ausgebildet ist.

## Claims

1. Bracket shelving for heavy loads, particularly long products made from wood, plastics material or metal, with uprights (1) and brackets (5) extending out therefrom, wherein cut-outs (3) are provided in the uprights and two upwardly bent hooks (10) which extend outwards over the upper face of the bracket are provided in each case on the brackets for releasable suspension in the cut-outs, the uprights preferably being constructed with a double T profile and the cut-outs being disposed at the same height in the flanges (2) of the profiled uprights, characterised in that the hooks (10) of the brackets (5) can be inserted horizontally into the cut-outs (3) and after insertion they can be fixed in the uprights (1) by lowering, wherein the cross-sections of the cut-outs (3) and the hooks (10) are adapted in shape to one another and the hooks (10) each consist of an extension (11) and a claw-like end (12) which is disposed above the extension (11) and constructed so that it is angled with reference to the plane of the web (4), so that after lowering the claw-like ends (12) engage at least partially behind the flanges (2) and form bearing surfaces with respect to the flanges (2).

2. Bracket shelving according to Claim 1, characterised in that the angled portions of the two claw-like ends (12) of two hooks (10) attached to one arm (5) are directed inwards towards the web (4) in mirror symmetry.

3. Bracket shelving according to Claim 1 or 2, characterised in that the claw-like ends (12) are constructed with a key-like cross-section.

4. Bracket shelving according to Claim 3, characterised in that the claw-like ends (12) are constructed with a trapeziform cross-section.

5. Bracket shelving according to one or more of Claims 1 to 4, characterised in that the cross-section of the claw-like ends (12) in the axial direction of the bracket (5) is rounded.

## Revendications

1. Rayonnage à consoles pour des charges lourdes, en particulier des produits de matériaux en long, en bois, matière plastique ou métal avec des supports (1) et des consoles (5) s'étendant à partir de ceux-ci, dans lequel sont prévus dans les supports de découpes à la matrice (3) et sur les consoles respectivement deux crochets (10) repliés vers le haut, s'étendant au-dessus de la face supérieure de la console et destinés à être accrochés mais détachables dans les découpes à la matrice, les supports étant réalisés de préférence en un profilé en double T et les découpes à la matrice étant réalisées dans les montants (2) des supports profilés au même niveau et les unes au dessus des autres, caractérisé en ce que dans les découpes à la matrice (3) les crochets des consoles (5) sont enfichables horizontalement et une fois l'enfichage réalisé, elles peuvent être fixées par abaissement dans les supports (1), tandis que les sections transversales des découpes à la matrice (3) et des crochets (10) sont adaptées les unes aux autres au point de vue forme et les crochets (10) se composent d'un embout (11) et d'une extrémité en crampon (12), qui se situe au-dessus de l'embout (11) et est réalisée coudée par rapport au plan de l'âme (4), les extrémités en crampon (12) saisissant par derrière après l'abaissement au moins partiellement les montants (2) et constituant des surfaces d'appui par rapport aux montants (2).

2. Rayonnage à consoles selon la revendication 1, caractérisé en ce que les coudes des extrémités en crampon (12) de deux crochets (10) appliqués à une console (5) sont dirigés symétriquement vers l'intérieur en direction de l'âme (4).

3. Rayonnage à consoles selon les revendications 1 ou 2, caractérisé en ce que les extrémités en crampon (12) sont réalisées avec une section transversale semblable à une clé.

4. Rayonnage à consoles selon la revendication 3, caractérisé en ce que les extrémités en crampon (12) sont réalisées avec une section transversale en forme de trapèze.

5. Rayonnage à consoles selon l'une ou plusieurs des revendications 1 à 4, caractérisé en ce que la forme de section transversale des extrémités en crampon (12) est réalisée arrondie en direction de l'axe de la console (5).
